(19) Europäisches Patentamt
European Patent Office
Office européen des brevets

(11) Veröffentlichungsnummer : **0 130 439**
**B1**

(12) # EUROPÄISCHE PATENTSCHRIFT

(45) Veröffentlichungstag der Patentschrift : **15.04.87**

(51) Int. Cl.[4] : **C 07 F 9/38**

(21) Anmeldenummer : **84106863.8**

(22) Anmeldetag : **15.06.84**

(54) **Verfahren zur Herstellung von Derivaten der Vinylphosphon-, oder Vinylpyrophosphonsäure.**

(30) Priorität : **29.06.83 DE 3323392**

(43) Veröffentlichungstag der Anmeldung : **09.01.85 Patentblatt 85/02**

(45) Bekanntmachung des Hinweises auf die Patenterteilung : **15.04.87 Patentblatt 87/16**

(84) Benannte Vertragsstaaten : **BE CH DE FR GB IT LI NL**

(56) Entgegenhaltungen :
**EP-A- 0 068 350**
**DE-A- 2 060 218**
**DE-A- 2 060 259**
**GB-A- 2 102 427**

(73) Patentinhaber : **HOECHST AKTIENGESELLSCHAFT**
**Postfach 80 03 20**
**D-6230 Frankfurt am Main 80 (DE)**

(72) Erfinder : **Pieper, Werner, Dr.**
**Am Käferbruch 14**
**D-5014 Kerpen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**EP 0 130 439 B1**

**Beschreibung**

Gegenstand vorliegender Erfindung ist ein Verfahren zur Herstellung von Derivaten der Vinylphosphon-, oder Vinylpyrophosphonsäure durch Umsetzung von Ketonen mit Phosphortrichlorid bei erhöhten Temperaturen.

Vinylphosphonsäure und ihre Derivate sind von technischem Interesse, da sie zu hochmolekularen Verbindungen polymerisieren oder mit anderen polymerisationsfähigen Verbindungen zu einem Mischpolymerisat verarbeitet werden können.

Beispielsweise werden 1-Phenylvinyl-1-phosphonsäure bzw. ihr Homopolymer oder Copolymere mit anderen Vinyl-Verbindungen zur Nachbehandlung phosphatierter Metalloberflächen verwendet (DE-OS-24 55 624, DE-OS-26 15 489).

Stand der Technik zur Herstellung von substituierten Vinylphosphonsäuren ist ein Verfahren, bei dem ein Keton mit Phosphortrichlorid in Gegenwart von Eisessig zur Reaktion gebracht wird (Houben-Weyl, Methoden der organischen Chemie XII/1, 363-4 [1963]). Unter Abspaltung von Acetylchlorid und Hydrogenchlorid entsteht dabei vermutlich eine cyclische Phosphonsäure, deren Hydrolyse 1-Hydroxyalkan-1-phosphonsäuren als Zwischenprodukte liefert, deren Dehydratisation durch Erhitzen in inerten Lösungsmitteln wie 1,1,2,2-Tetrachlorethan schließlich die gewünschte substituierte Vinylphosphonsäure liefert (DE-OS-20 60 218).

Diese, über mehrere Zwischenstufen verlaufende Arbeitsweise ist jedoch sehr aufwendig.

Überraschenderweise wurde nun gefunden, daß ein wesentlich einfacherer Zugang zu Derivaten der Vinylphosphonsäure möglich ist, wenn man im oben genannten Verfahren den Eisessig durch phosphorige Säure ersetzt.

Das neue Verfahren ist dadurch gekennzeichnet, daß man als Keton Cyclohexanon, α-Ketotetrahydronaphthalin(α-Tetralon) oder eine Verbindung der allgemeinen Formel

$$RR'CH-\overset{O}{\overset{\|}{C}}-R''$$

einsetzt, in der R und R' gleich oder verschieden sein können und für Wasserstoff oder einen halogensubstituierten oder nicht substituierten Alkyl-, Aryl-, Alkaryl- oder Aralkylrest mit 1 bis 18 C-Atomen stehen, während R" einen Alkyl-, Aryl-, Alkaryl- oder Aralkylrest mit 1 bis 18 C-Atomen darstellt. Die Umsetzung dieses Ketons wird mit phosphoriger Säure und Phosphortrichlorid im Molverhältnis 2 : 1 : 1, gegebenenfalls in einem inerten Lösemittel bei Temperaturen zwischen 20 und 150 °C, insbesondere zwischen 40-120 °C, durchgeführt, wobei 1 Mol phosphorige Säure durch ein weiteres Mol Phosphortrichlorid und drei Äquivalente Wasser ersetzt werden kann, so daß zu einer Mischung von Keton und Wasser im Molverhältnis 1 : 1,5 insgesamt 1 Mol Phosphortrichlorid zugesetzt wird. Vorzugsweise wird das Keton zusammen mit der phosphorigen Säure vorgelegt, auf die Reaktionstemperatur erhitzt und das Phosphortrichlorid langsam zudosiert, wobei Hydrogenchlorid entweicht.

Vorteilhaft kann es außerdem sein, das Keton im Überschuß einzusetzen, entweder um es gleichzeitig als Lösemittel zu verwenden oder um die Reste von überschüssiger phosphoriger Säure im Endprodukt gering zu halten.

Eine weitere mögliche Variante des erfindungsgemäßen Verfahrens besteht darin, das Keton zusammen mit dem Phosphortrichlorid im Molverhältnis größer gleich eins zu eins, gegebenenfalls mit dem inerten Lösemittel, vorzulegen und dann das Wasser zuzusetzen, wobei analog 1,5 Äquivalente Wasser benötigt werden. Natürlich kann auch hier die Hälfte des Phosphortrichlorids und das Wasser durch die entsprechende Stoffmenge phosphoriger Säure ersetzt werden.

Im Falle reaktiver Ketone, wie z. B. Acetophenon, werden in erster Linie Vinylpyrophosphonsäuren gebildet, die — sofern gewünscht — mit stöchiometrischen Wassermengen in bekannter Weise zu den entsprechenden Vinylphosphonsäuren hydrolysiert werden können.

Im Falle wenig reaktiver Ketone schließt sich vor oder nach der Hydrolyse eine thermische Nachbehandlung des zunächst anfallenden Rohprodukts an. Dazu wird das Reaktionsprodukt für 1 bis 60 Minuten auf Temperaturen zwischen der Umsetzungstemperatur und 250 °C erhitzt. Die jeweilige Mindesttemperatur ist dabei von der Reaktionsfähigkeit des verwendeten Ketons abhängig.

Das neue Verfahren war für den Fachmann nicht vorhersehbar und besitzt gegenüber dem herkömmlichen, dem Stand der Technik entsprechenden Verfahren, u. a. den Vorteil, daß es nicht notwendig ist, einen Hilfsstoff wie Essigsäure zuzusetzen, so daß der Zwangsanfall eines Nebenproduktes wie Acetylchlorid vermieden wird. Es ist schon vorgeschlagen worden DE-A1-31 25 329) Derivate der Vinylphosphon- oder Vinylpyrophosphonsäuren durch Umsetzung eines Ketons mit Tetraphosphorhexoxid in Gegenwart von katalytischen Mengen einer protonenabgebenden Substanz, wie z. B. $H_3PO_3$, herzustellen, doch hat diese Arbeitsweise den Nachteil, daß sie sich nicht im technischen Maßstab durchführen läßt, da Tetraphosphorhexoxid kein technisches Produkt darstellt, nur im Labor arbeits- und kostenintensiv hergestellt werden kann und im allgemeinen mit elementarem gelbem Phosphor verunreinigt ist.

Die folgenden Beispiele mögen die Einfachheit und den technischen Fortschritt des neuen Verfahrens dokumentieren.

Beispiel 1

79,6 g (0,4 mol) p-Bromacetophenon werden mit 16,4 g (0,2 mol) phosphoriger Säure in 100 ml Toluol in einem 500-ml-Mehrhalskolben mit Rückflußkühler, Thermometer, Rührer und Tropftrichter vorgelegt und auf 90-100 °C verwärmt. 27,5 g (0,2 mol) Phosphortrichlorid werden in 30 Minuten unter schwacher Wärmezufuhr zugetropft. Nach 10-minütiger Nachreaktion bei Siedetemperatur wird durch Zugabe von 3,6 g (0,2 mol) Wasser die Pyroverbindung hydrolysiert. Nach abermals 10 Minuten Nachreaktion läßt man abkühlen. Aus der Lösung kristallisiert nach dem Abkühlen 1-(4-Bromphenyl)-vinyl-1-phosphonsäure in farblosen Kristallen aus. 85 g (0,32 mol) der Phosphonsäure werden isoliert, was einer Ausbeute von 80,8 % entspricht. Die Ausbeute kann durch Recirculieren der Mutterlauge weiter gesteigert werden.

Beispiel 2

In einer Apparatur analog Beispiel 1 werden 43,2 g (0,3 mol) α-Tetralon mit 12,1 g (0,15 mol) phosphoriger Säure in 90 ml Toluol vorgelegt und auf 90-100 °C erwärmt. 20,3 g (0,15 mol) Phosphortrichlorid werden zugetropft. Danach folgt eine Nachreaktion von 30 Minuten bei Siedetemperatur. Nach Abkühlen auf 70 °C wird mit 2,7 g (0,15 mol) Wasser hydrolysiert. Nach dem Abkühlen lassen sich 56 g (0,27 mol) 3,4-Dihydronaphthalin-1-phosphonsäure isolieren, was einer Ausbeute von 90 % entspricht. Durch Recirculieren der Mutterlauge läßt sich die Ausbeute auf über 90 % steigern.

Beispiel 3

In einer Apparatur analog Beispiel 1 werden 80,4 g (0,67 mol) Acetophenon mit 27,5 g (0,335 mol) phosphoriger Säure in 100 ml Methylenchlorid vorgelegt und zum Sieden erhitzt. 46,1 g (0,335 mol) Phosphortrichlorid werden in 50 Minuten zudosiert. 6,2 g (0,34 mol) Wasser werden zugesetzt, das Lösemittel abdestilliert und der Rückstand 10 Minuten auf 150 °C erhitzt. 120 g Rohprodukt werden isoliert mit einer Zusammensetzung laut $^{31}$P-NMR-Spektrum von 91,2 Gew.% 1-Phenylvinyl-1-phosphonsäure, 1,9 Gew.% 1-Hydroxy-1-phenylvinyl-1-phosphonsäure, 5,1 Gew.% phosphoriger Säure und 1,8 Gew.% Phosphorsäure.

Beispiel 4

In einer Apparatur analog Beispiel 1 werden 184 g (1,53 mol) Acetophenon zusammen mit 41,4 g (2,3 mol) Wasser vorgelegt und auf 80 °C erwärmt. 210,8 g (1,53 mol) Phosphortrichlorid werden zugetropft, wobei die Reaktionstemperatur gegen Ende des Zutropfens auf 100 °C gesteigert wird. Das Produkt wird mit 13,9 g (0,77 mol) Wasser hydrolysiert und 5 Minuten auf 150 °C erhitzt. Es werden 279 g Reaktionsprodukt isoliert mit einer Zusammensetzung laut $^{31}$P-NMR-Spektrum von 87 % 1-Phenylvinyl-1-phosphonsäure neben u. a. 4 % phosphoriger Säure.

Beispiel 5

In einer Apparatur analog Beispiel 1 werden 144 g (1,2 mol) Acetophenon zusammen mit 137,5 g (1 mol) Phosphortrichlorid vorgelegt. Bei Raumtemperatur beginnt man mit der Wasserdosierung. 27 g (1,5 mol) Wasser werden innerhalb von 35 Minuten zugesetzt, wobei die Reaktionstemperatur bei geringer Wärmezufuhr gegen Ende 100 °C erreicht. Im Wasserstrahlvakuum wird bei 150 °C überschüssiges Keton abgezogen. Die so erhaltenen 141 g Rohprodukt werden mit 80 ml Wasser hydrolysiert und zu 221 g wäßriger Produktlösung verdünnt. Als Zusammensetzung ergibt sich nach dem $^{31}$P-NMR-Spektrum (bezogen auf wasserfreies Endprodukt) : ca. 95 Gew.% 1-Phenylvinyl-1-phosphonsäure neben u. a. 1,5 Gew.% Phosphorsäure und ca. 1,2 Gew.% phosphoriger Säure.

Beispiel 6

In einer Apparatur analog Beispiel 1 werden 49 g (0,5 mol) Cyclohexanon mit 20,5 g (0,25 mol) phosphoriger Säure in 100 ml Toluol vorgelegt und auf 90 °C erwärmt. 34 g (0,25 mol) Phosphortrichlorid in 50 ml Toluol werden zugetropft. Das Lösemittel wird anschließend abdestilliert und das Rohprodukt für 2 Minuten auf 200 °C erhitzt. Nach dem Abkühlen auf 100 °C wird mit 4,5 g (0,25 mol) Wasser hydrolysiert und das Rohprodukt in Eisessig aufgenommen. Aus der essigsauren Lösung kristallisieren 50 g (0,3 mol) Cyclohexen-1-phosphonsäure aus, was einer Ausbeute von 61,7 % entspricht.

Beispiel 7

In einer Apparatur analog Beispiel 1 werden 300 ml Aceton mit 27 g (1,5 mol) Wasser vorgelegt und

zum Sieden erhitzt. 137,5 g (1 mol) Phosphortrichlorid werden zugetropft. Nach 10 Minuten Nachreaktion bei Siedetemperatur wird mit 20 ml Wasser hydrolysiert; die Lösungsmittelphase wird von dem entstandenen Harz abgetrennt, welches anschließend 2 Minuten auf 200 °C erhitzt wird. Es werden 92 g Produkt mit einer Zusammensetzung laut $^{31}P$-NMR-Spektrum von 75 Gew.% Propen-2-phosphonsäure neben 25 Gew.% phosphoriger Säure erhalten.

**Patentansprüche**

1. Verfahren zur Herstellung von Derivaten der Vinylphosphon-, oder Vinylpyrophosphonsäure durch Umsetzung von Ketonen mit Phosphortrichlorid bei erhöhten Temperaturen, dadurch gekennzeichnet, daß man als Keton Cyclohexanon, α-Ketotetrahydronaphthalin oder eine Verbindung der allgemeinen Formel

$$RR'CH-\overset{\overset{\displaystyle O}{\|}}{C}-R''$$

einsetzt, in der R und R' gleich oder verschieden sein können und für Wasserstoff oder einen halogensubstituierten oder nicht substituierten Alkyl-, Aryl-, Alkaryl- oder Aralkylrest mit 1 bis, 18 C-Atomen stehen, während R" einen Alkyl-, Aryl-, Alkaryl- oder Aralkylrest mit 1 bis 18 C-Atomen darstellt; die Umsetzung in Gegenwart von phosphoriger Säure durchführt, indem man Keton, phosphorige Säure und Phosphortrichlorid in einem Molverhältnis von 2 : 1 : 1 einsetzt, wobei gegebenenfalls 1 Mol phosphorige Säure durch ein weiteres Mol Phosphortrichlorid und 3 Mol Wasser ersetzt werden kann.

2. Verfahren nach Anspruch 1, dadurch gekennzeichnet, daß man das Keton zusammen mit der phosphorigen Säure vorlegt, die Mischung erhitzt und das Phosphortrichlorid zudosiert.

3. Verfahren nach Anspruch 1 oder 2, dadurch gekennzeichnet, daß man die Umsetzung in Gegenwart eines inerten Lösungsmittels durchführt.

4. Verfahren nach Anspruch 3, dadurch gekennzeichnet, daß man als Lösungsmittel einen Überschuß an Keton einsetzt.

5. Verfahren nach Anspruch 1 bis 4, dadurch gekennzeichnet, daß man die Umsetzung bei Temperaturen zwischen 20 und 150 °C durchführt.

**Claims**

1. Process for making derivatives of vinylphosphonic or vinylpyrophosphonic acid by reacting a ketone with phosphorus trichloride at elevated temperatures,. which comprises using as the ketone cyclohexanone, α-ketotetrahydronaphtalene or a compound of the general formula

$$RR'CH-\overset{\overset{\displaystyle O}{\|}}{C}-R''$$

in which R and R' being identical or different stand for hydrogen or a halogen-substituted or unsubstituted alkyl, aryl, alkylaryl or arylalkyl group having from 1-18 carbon atoms, whereas R" stands for an alkyl, aryl, alkylaryl or arylalkyl group having from 1-18 carbon atoms; effecting the reaction in the presence of phosphorous acid by using the ketone, phosphorous acid and phosphorus trichloride in a molar ratio of 2 : 1 : 1, 1 mol phosphorous acid being replaceable by one further mol phosphorus trichloride and 3 mols water, if desired.

2. Process as claimed in claim 1, wherein the ketone is mixed with phosphorous acid, the mixture is heated and phosphorus trichloride is metered thereinto.

3. Process as claimed in claim 1 or 2, wherein the reaction is carried out in the presence of an inert solvent.

4. Process as claimed in claim 3, wherein an excess of ketone is used as the solvent.

5. Process as claimed in any of claims 1-4, wherein the reaction is carried out a temperatures between 20° and 150 °C.

**Revendications**

1. Procédé de préparation de dérivés de l'acide vinylphosphonique ou de l'acide vinylpyrophosphonique par réaction de cétones avec le trichlorure de phosphore à des températures élevées, caractérisé en ce que l'on utilise, comme cétone, la cyclohexanone, l'α-cétotétrahydronaphtalène ou un composé de formule générale

$$RR'CH-\overset{\overset{\displaystyle O}{\|}}{C}-R''$$

dans laquelle R et R′ peuvent être identiques ou différents et représentent l'hydrogène, un groupe alkyle, aryle, alkylaryle ou arylalkyle en $C_1$-$C_{18}$ halogénosubstitué ou non substitué, tandis que R″ représente un groupe alkyle, aryle, alkylaryle ou arylalkyle en $C_1$-$C_{18}$, on effectue la réaction en présence d'acide phosphoreux en utilisant la cétone, l'acide phosphoreux et le trichlorure de phosphore en proportions molaires de 2 : 1 : 1, 1 mol d'acide phosphoreux pouvant éventuellement être remplacée par une autre mole de trichlorure de phosphore et 3 moles d'eau.

2. Procédé selon la revendication 1, caractérisé en ce que l'on charge initialement la cétone conjointement avec l'acide phosphoreux, on chauffe le mélange et on ajoute le trichlorure de phosphore dosé.

3. Procédé selon la revendication 1 ou 2, caractérisé en ce que l'on effectue la réaction en présence d'un solvant inerte.

4. Procédé selon la revendication 3, cartactérisé en ce que l'on utilise comme solvant un excès de cétone.

5. Procédé selon l'une des revendications 1 à 4, caractérisé en ce que l'on effectue la réaction à des températures comprises entre 20 et 150 °C.